# EUROPEAN PATENT SPECIFICATION

(11) **EP 3 786 562 B1**
(45) Date of publication and mention of the grant of the patent: **29.03.2023**
(21) Application number: 19382732.6
(22) Date of filing: 28.08.2019
(51) Int. Cl.: F28D 7/16, F02M 26/32, F28F 9/22, F28D 21/00

(54) **EXHAUST GAS RECIRCULATION COOLER**
ABGASRÜCKFÜHRUNGSKÜHLER
REFROIDISSEUR À RECIRCULATION DE GAZ D'ÉCHAPPEMENT

(43) Date of publication of application: 03.03.2021
(73) Proprietor: Valeo Termico S.A., 50011 Zaragoza (ES)
(72) Inventor: SÁNCHEZ SIERRA, Guillermo, 50011 ZARAGOZA (ES)
(74) Representative: Valeo Systèmes Thermiques

(56) References cited:
- WO-A1-2013/022072
- DE-A1-102014 202 447
- US-A1- 2015 260 466
- US-A1- 2017 336 147

## Description

The present invention generally relates to an Exhaust Gas Recirculation (EGR) cooler, more particularly, to an Exhaust Gas Recirculation cooler having a wing formed in a housing of the EGR cooler to enhance thermal efficiency of the EGR cooler.

### Background of the invention:

Generally, an Exhaust Gas Re-circulation cooler, hereinafter referred to as EGR cooler, is provided in a vehicle to cool exhaust gas before being re-circulated to an engine of the vehicle. The EGR cooler receives the part of exhaust gas from the engine of the vehicle and the exhaust gas rejects heat in the EGR cooler, so that the exhaust gas can be used in the vehicle. The EGR cooler may receive a coolant, which is fluidically isolated from the exhaust gas, to exchange heat with the exhaust gas received from the engine of the vehicle. The EGR cooler may include heat exchange tubes, in which the exhaust gas flows through, and the coolant flows around the heat exchange tubes to absorb heat from the exhaust gas. In some cases, an inlet interface and outlet interface may be placed on same wall of the EGR cooler for delivering coolant in and collecting coolant out of the EGR cooler respectively. In such cases, some portion of the coolant may directly flow from the inlet interface to outlet interface, instead of going around the heat exchange tubes, which creates sub-optimal heat exchange between the exhaust gas and the coolant. Further, inefficient heat exchange between the exhaust gas and the coolant may raise risk of boiling in the heat exchange tubes, which increase the fatigue of the EGR cooler. As the fatigue of the EGR cooler increases, service life span of the EGR cooler is substantially reduced. To mitigate direct flow of the coolant from the inlet to the outlet, an additional dedicated component, preferably a baffle, is disposed in between the inlet interface and outlet interface at the inner wall of the EGR cooler. The baffle provided in the inner wall of the EGR cooler may redirect the coolant around the heat exchange tubes, however, adding such additional component in the EGR cooler may increase weight and cost of the EGR cooler. US 2017/336147 discloses an EGR cooler comprising a stamped wing.

Accordingly, there is need for an EGR cooler having a simple assembly to redirect the coolant around heat exchange tubes received in the EGR cooler. Further, there is a need for a simple structure that mitigate risk of boiling in the heat exchange tubes of an EGR cooler, which increases service life of the EGR cooler.

### Description of the invention:

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of the foregoing, the invention herein provides a heat exchanger as defined by claim 1, particularly an EGR cooler for a vehicle. The heat exchanger includes a housing and at least one inclined wing. The housing may have a first opening and a second opening spaced apart from the first opening of the housing. The first opening and the second opening are adapted to circulate a first fluid around a plurality of heat exchange elements disposed in the housing. The at least one inclined wing is formed along an inner wall of the housing, at at-least one edge of the first opening, that is proximal to the second opening of the housing, to direct the first fluid around the plurality of heat exchange elements. The at least one inclined wing is inclined towards the plurality of heat exchange elements disposed in the housing and in direction away from the second opening at an angle with respect to the first opening of the housing.

Further, the plurality of heat exchange elements is adapted to carry a second fluid to exchange heat with the first fluid flowing around the plurality of heat exchange elements.

Generally, the housing is formed by a plurality of walls, in which the first opening and the second opening are formed thereon.

In the invention, the first opening and the second opening are formed on a first wall and a second wall amongst the plurality of walls of the housing respectively. Further, the at least one inclined wing is formed on more than one edge of the first opening, that are proximal to the second opening formed on the second wall of the housing.

In one embodiment, wherein the at least one inclined wing is inclined at an angle ranging from 0° to 90° with respect to the first opening of the housing. Further, the first fluid is coolant and the second fluid is exhaust gas.

Generally, the at least one inclined wing is stamped to the first opening of the housing.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:

### Brief description of the drawings:

Fig. 1 illustrates a perspective view of a heat exchanger not forming part of the invention, particularly an Exhaust Gas Recirculation (EGR) cooler, in accordance with an embodiment of the present invention;
Fig. 2A illustrates a perspective view of a housing of the EGR cooler having a first opening and a second opening on same wall of the housing of the EGR cooler of FIG.1;
Fig. 2B illustrates a cross-section of the housing of Fig. 2A;
Fig. 3A illustrates a perspective view of the EGR cooler having the first opening and the second opening in different walls of the housing, according to an embodiment of the present invention; and
Fig. 3B illustrates a perspective view of the housing of the EGR cooler of Fig. 3A.

It must be noted that the figures disclose the invention in a detailed enough way to be implemented, the figures helping to better define the invention if needs be. The invention should however not be limited to the embodiment disclosed in the description.

### Detailed description of the preferred embodiments:

The present invention relates to a heat exchanger, particularly to an Exhaust Gas Recirculation (EGR) cooler, having a simple feature to enable efficient distribution of coolant in the EGR cooler. The heat exchanger, hereinafter referred to as EGR cooler, may receive a portion of exhaust gas from an engine of the vehicle and cool the exhaust before re-circulating the exhaust gas o the engine. The EGR cooler may include a housing having an inlet opening with a wing and an outlet opening that enable efficient distribution of coolant in the EGR cooler. Further, the wing is integrally formed or stamped to the inlet opening of the housing to redirect the coolant towards heat exchange tubes provided in the housing. The wing formed in the housing may restrict flow of the coolant directly from the inlet opening to the outlet opening without repartition around the heat exchange tubes. As the coolant is efficiently distributed around the heat exchange tubes, heat exchange between the coolant and exhaust gas flowing through the heat exchange tubes is optimal, which increase the thermal efficiency of the EGR cooler. Further, direct flow of the coolant between the inlet opening and the outlet opening is restricted, thereby eliminating risk of boiling of coolant around the heat exchange tubes. As the risk of boiling of coolant is mitigated, thereby eliminating detrimental damages of the EGR cooler and increase service life of the EGR cooler.

While aspects relating to the wing provided in an inner wall of the EGR cooler as described above and henceforth can be implemented at an inlet or outlet opening of the EGR cooler with different inclined angles, the embodiments are described in the context of the following system(s).

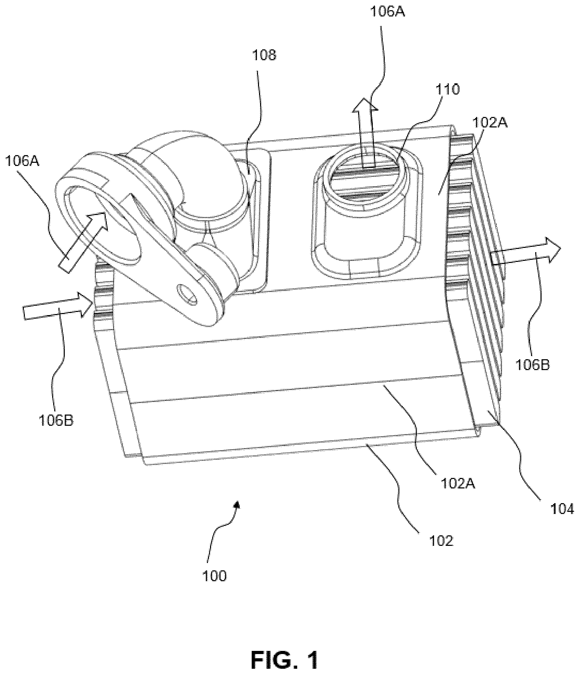

Fig. 1 illustrates a perspective view of a heat exchanger 100, particularly an Exhaust Gas Recirculation (EGR) cooler, in accordance with an embodiment not forming part of the present invention. The heat exchanger 100, hereinafter referred to as EGR cooler, includes a housing 102, and one or more heat exchange elements 104 disposed in the housing 102. Further, a first fluid circuit 106A is formed around the one or more heat exchange elements 104 and a second fluid circuit 106B is formed through the one or more heat exchange elements 104. The one or more heat exchange elements 104, hereinafter referred to as heat exchange elements, can be heat tubes or plates. Further, the housing 102 receives a first fluid, preferably coolant from a coolant tank (not shown in Figs) through the first fluid circuit 106A. Also, the housing 102 receives a second fluid, preferably exhaust gas, from an engine of a vehicle through the second fluid circuit 106B. The first fluid circuit 106A and the second fluid circuit 106B are fluidically isolated from each other and adapted to exchange heat there-between. The second fluid, hereinafter referred to as exhaust gas, flowing through the heat exchange elements 104 is adapted to dissipate heat to the first fluid, hereinafter referred to as coolant, flowing around the heat exchange elements 104, to cool the exhaust gas. The cooled exhaust gas is re-circulated back to the engine of the vehicle. The housing 102 further includes a first opening 108 and a second opening 110 formed on walls of the housing 102 to enable circulation of the coolant, in the first fluid circuit 106A formed in the housing 102. In one embodiment, the housing 102 is formed by one or more walls 102A on which the first opening 108 and the second opening 110 are formed. In one embodiment, the first opening 108 and the second opening 110 may be provided on same wall of the housing 102 or adjacent walls of the housing 102. The first opening 108 is adapted to introduce the coolant to the housing 102, whereas the second opening 110 is adapted to receive the coolant from the housing 102. In some cases, some portion of the coolant may flow directly flow from the first opening 108 to the second opening 110 without extracting heat from the exhaust gases flowing through the heat exchange elements 104, which may cause inefficient heat exchange between the coolant flowing around the heat exchange elements 104 and the exhaust gas flowing in the heat exchanger element 104. To overcome such problems, wings are formed on any one of the first opening 108 and the second opening 110 of housing 102. Function and structure of the wings are explained in the forthcoming sections. The first opening 108 is an inlet opening connected to a first inlet to introduce the coolant to the housing 102, and the second opening 110 is an outlet opening connected to a first outlet to receive the coolant from the housing 102. The housing may be provided with a second inlet to ingress the exhaust gas into the heat exchange elements 104 and a second outlet to egress the exhaust gas from the heat exchanger elements 104.

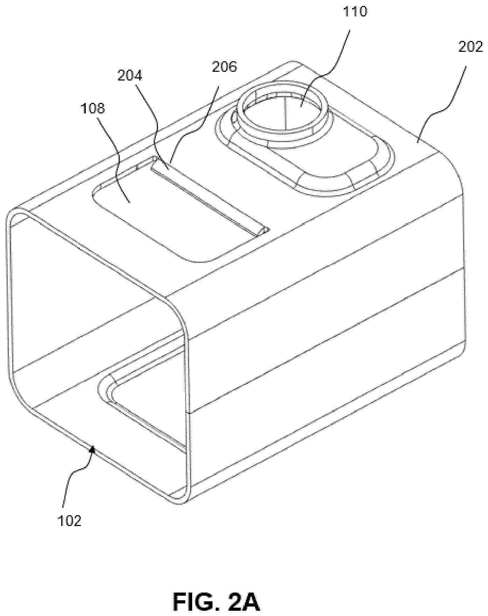

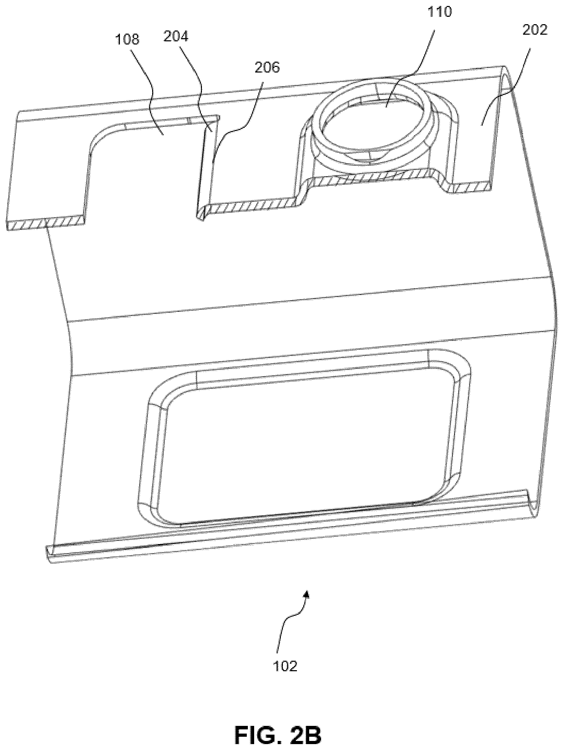

Figs. 2A and 2B illustrate different views of the housing 102 of Fig. 1 having the first opening 108 and the second opening 110 on same wall 202 amongst the one or more walls 102A of the housing 102. In one example, Fig. 2A illustrates a perspective view of the housing 102 of Fig. 1 and Fig, 2B illustrates a sectional view of the housing 102 of Fig. 1. The housing 102 further include one or more wings 204 formed along an inner wall of the housing 102 at edges of the first opening 108 of the housing 102. According to this embodiment, the housing 102 includes one wing 204 formed along the inner wall of the housing 102 and at an edge 206 of the first opening 108, which is proximal to the second opening 110 of the housing. In other words, the wing 204 is formed at the edge 206 of the first opening 108 of the housing 102, in which the edge 206 of the first opening 108 is proximal to the second opening 110 of the housing 102. The wing 204 is inclined towards the heat exchanger elements 104 provided in the housing 102 at an angle with respect to the first opening 108 of the housing 102. In one embodiment, the wing 204 is inclined at angle ranging from 0° to 90° with respect to the first opening 108 of the housing 102. In one embodiment, the wing 204 is tilted or angled in a direction away from the second opening 110 of the housing 102.

According to the present embodiment illustrated in Fig. 2A, the first opening 108 and the second opening 110 are formed on the same wall 202 amongst the one or more walls 102A of the housing 102, in such a way that the first opening 108 is adjacent to the second opening 110. In other words, the first opening 108 is spaced apart from the second opening 110 on the wall 202 of the housing 102. In such embodiment, the wing 204 is formed at the edge 206 of the first opening 108, which is proximal to the second opening 110 of the housing 102. In another embodiment, the wing 204 can be formed throughout the periphery of the first opening 108 of the housing 102, and inclined towards the heat exchange elements 104. The wing 204 is adapted to optimally direct the coolant towards the heat exchange elements 104 and restricts direct flow of the coolant from the first opening 108 to the second opening 110. In another embodiment, the wing 204 may direct the coolant towards to an end of the heat exchange elements 104, which is fluidically connected to the second inlet, to cool the exhaust gas entering into the heat exchange elements 104. The end of the heat exchange elements 104 may experience high temperature due to the hot exhaust gas entering from the end of the heat exchange elements 104, which may affect fatigue of the EGR cooler 100. As the coolant is directed to the end of the heat exchange elements 104, boiling of coolant at the end of the heat exchange elements 104 is avoided. As the coolant is effectively directed towards the heat exchange elements 104, heat exchange between the coolant and the exhaust is optimum, thereby increasing thermal efficiency of the EGR cooler 100 and mitigating boiling of heat exchange elements 104, which may damage the EGR cooler 100. As the coolant is efficiently directed to the heat exchange elements 104, fatigue of the EGR cooler 100 is reduced, thereby increasing service life of the EGR cooler 100.

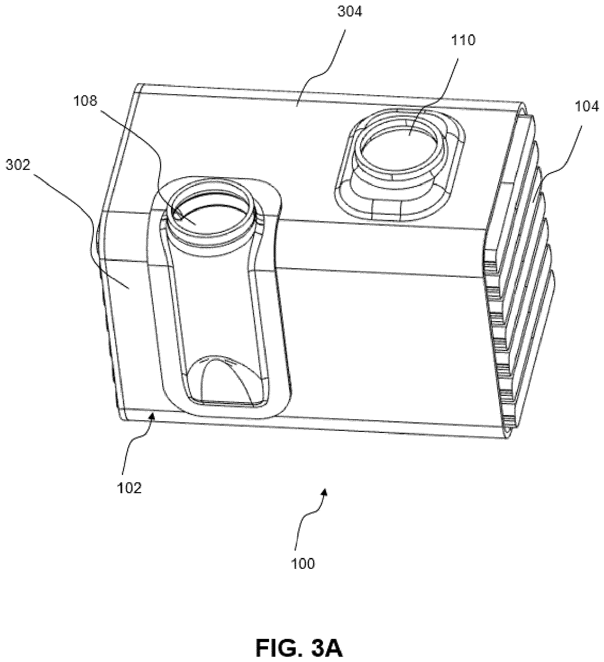

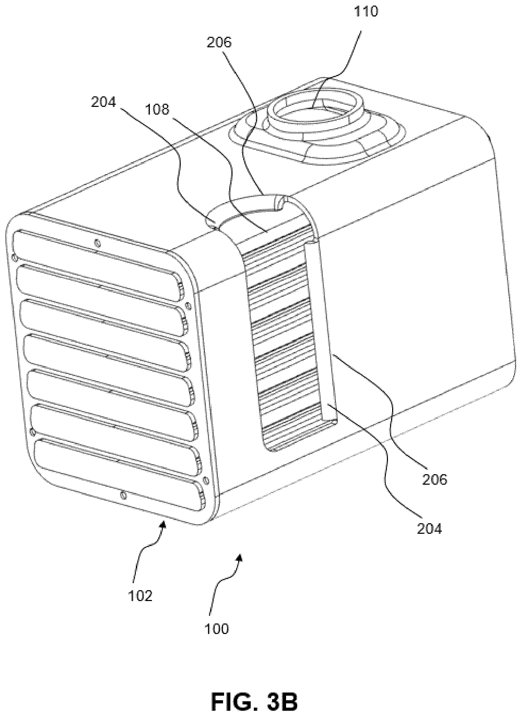

Figs. 3A and 3B illustrate perspective view of the EGR cooler 100 having the first opening 108 and the second opening 110 in different walls of the housing 102, according to an embodiment of the present invention. In this embodiment, the first opening 108 is formed on a first wall 302 amongst the one or more walls 102A and the second opening 110 is formed on a second wall 304 amongst the one or more walls 102A of the housing 102. The first wall 302 may be an adjacent wall to the second wall 304. The second opening 110 is formed on the second wall 304, while the first opening 108 is formed at a corner connecting the first wall 302 and the second wall 304 of the housing 102 as shown in Fig. 3A. In such cases, the wing 204 is formed on more than one edge of the first opening 108 as shown in Fig. 3B. In one embodiment, the wing 204 can be formed in all edges of the first opening 108 to restrict direct flow of coolant from the first opening 108 to the second opening 110. In the embodiment of the invention, the wing 204 is formed on the edges of the first opening 108, which are proximal to the second opening 110 of the housing 102. Further, the wing 204 is integrally formed or stamped to the first opening 108 of the housing 102 to redirect the coolant towards the heat exchange elements 104 provided in the housing 102. As thermal stress is less in an area above the heat exchange elements 104 and in between the first opening 108 and the second opening 110, minimal coolant is enough to have efficient thermal efficiency. Therefore, the wing 204 provided in the first opening 108 restricts flow of coolant at the area above the heat exchange elements 104 and in between the first opening 108 and the second opening 110. Although, the present invention having the wing 204 attached to the first opening 108 to control the flow of coolant in the between the first opening 108 and the second opening 110, it can be implemented to direct the flow of exhaust gas on the heat exchange elements 104 of the EGR cooler 100.

Several modifications and improvement might be applied by the person skilled in the art to the heat exchanger and such modifications and improvements will still be considered within the scope and ambit of the present invention, as long the invention includes an opening attached with a wing at the edges of the opening to redirect flow of any fluid in any housing.

In any case, the invention cannot and should not be limited to the embodiments specifically described in this document, as other embodiments might exist. The invention shall spread to any equivalent means and any technically operating combination of means.

## Claims

1. A heat exchanger (100) for a vehicle, comprising:
a housing (102) having a first opening (108) and a second opening (110) spaced apart from the first opening (108), wherein the first opening (108) and the second opening (110) are adapted to circulate a first fluid around a plurality of heat exchange elements (104) disposed in the housing (102); and
at least one inclined wing (204) formed along an inner wall of the housing (102) and at at-least one edge of the first opening (108) that is proximal to the second opening (110) of the housing (102), to direct the first fluid around the plurality of heat exchange elements (104), wherein the at least one inclined wing (204) is inclined towards the plurality of heat exchange elements (104) disposed in the housing (102) and in a direction away from the second opening (110) at an angle with respect to the first opening (108) of the housing (102) and wherein the at least one inclined wing (204) is stamped to the first opening (108) of the housing (102), wherein the housing (102) is formed by a plurality of walls (102A), in which the first opening (108) and the second opening (110) are formed on and wherein the first opening (108) and the second opening (110) are formed on a first wall (302) and a second wall (304) amongst the plurality of walls (102A) of the housing (102) respectively, the second opening (110) is formed on the second wall (304), **characterised in that** the first opening (108) is formed at a corner connecting the first wall (302) and the second wall (304) of the housing (102) and wherein the at least one inclined wing (204) is formed on more than one edge (206) of the first opening (108), that are proximal to the second opening (110) formed on the second wall (304) of the housing (102).

2. The heat exchanger (100) as claimed in claim 1, wherein the plurality of heat exchange elements (104) is adapted to carry a second fluid to exchange heat with the first fluid flowing around the plurality of heat exchange elements (104).

3. The heat exchanger (100) as claimed in any of preceding claims, wherein the at least one inclined wing (204) is inclined at an angle ranging from 0° to 90° with respect to the first opening (108) of the housing (102).

4. The heat exchanger (100) as claimed in claim 1, wherein the first fluid is coolant and the second fluid is exhaust gas.

## Patentansprüche

1. Wärmetauscher (100) für ein Fahrzeug, umfassend:
ein Gehäuse (102) mit einer ersten Öffnung (108) und einer zweiten Öffnung (110), die von der ersten Öffnung (108) beabstandet ist, wobei die erste Öffnung (108) und die zweite Öffnung (110) dazu angepasst sind, ein erstes Fluid um eine Vielzahl von Wärmetauschelementen (104), die in dem Gehäuse (102) angeordnet sind, zirkulieren zu lassen; und
mindestens einen geneigten Flügel (204), ausgebildet entlang einer Innenwand des Gehäuses (102) und an mindestens einer Kante der ersten Öffnung (108), die proximal zu der zweiten Öffnung (110) des Gehäuses (102) ist, um das erste Fluid um die mehreren Wärmetauschelemente (104) herum zu leiten, wobei der mindestens eine geneigte Flügel (204) zu der Vielzahl von Wärmetauschelementen (104), die in dem Gehäuse (102) angeordnet sind, hin und in einer Richtung weg von der zweiten Öffnung (110) in einem Winkel in Bezug auf die erste Öffnung (108) des Gehäuses (102) geneigt ist und wobei der mindestens eine geneigte Flügel (204) an die erste Öffnung (108) des Gehäuses (102) gestanzt ist, wobei das Gehäuse (102) durch eine Vielzahl von Wänden (102A) ausgebildet ist, in denen die erste Öffnung (108) und die zweite Öffnung (110) ausgebildet sind, und wobei die erste Öffnung (108) und die zweite Öffnung (110) in einer ersten Wand (302) beziehungsweise einer zweiten Wand (304) aus der Vielzahl von Wänden (102A) des Gehäuses (102) ausgebildet sind, wobei die zweite Öffnung (110) in der zweiten Wand (304) ausgebildet ist, **dadurch gekennzeichnet, dass** die erste Öffnung (108) an einer Ecke ausgebildet ist, welche die erste Wand (302) und die zweite Wand (304) des Gehäuses (102) miteinander verbindet, und wobei der mindestens eine geneigte Flügel (204) an mehr als einer Kante (206) der ersten Öffnung (108) ausgebildet ist, die proximal zu der zweiten Öffnung (110) sind, welche an der zweiten Wand (304) des Gehäuses (102) ausgebildet ist.

2. Wärmetauscher (100) nach Anspruch 1, wobei die Vielzahl von Wärmetauschelementen (104) dazu angepasst ist, ein zweites Fluid zu transportieren, um Wärme mit dem ersten Fluid auszutauschen, das um die Vielzahl von Wärmetauschelementen (104) strömt.

3. Wärmetauscher (100) nach einem der vorhergehenden Ansprüche, wobei der mindestens eine geneigte Flügel (204) in einem Winkel im Bereich von 0° bis 90° in Bezug auf die erste Öffnung (108) des Gehäuses (102) geneigt ist.

4. Wärmetauscher (100) nach Anspruch 1, wobei das erste Fluid Kühlmittel ist und das zweite Fluid Abgas ist.

## Revendications

1. Échangeur de chaleur (100) pour un véhicule, comprenant :
un boîtier (102) ayant une première ouverture (108) et une seconde ouverture (110) espacée de la première ouverture (108), la première ouverture (108) et la seconde ouverture (110) étant adaptées pour faire circuler un premier fluide autour d'une pluralité d'éléments d'échange de chaleur (104) disposés dans le boîtier (102) ; et
au moins une aile inclinée (204) formée le long d'une paroi intérieure du boîtier (102) et au moins un bord de la première ouverture (108) qui est proximal à la seconde ouverture (110) du boîtier (102), pour diriger le premier fluide autour de la pluralité d'éléments d'échange de chaleur (104), l'au moins une aile inclinée (204) étant inclinée vers la pluralité d'éléments d'échange de chaleur (104) disposés dans le boîtier (102) et dans une direction s'éloignant de la seconde ouverture (110) selon un angle par rapport à la première ouverture (108) du boîtier (102), et l'au moins une aile inclinée (204) étant emboutie vers la première ouverture (108) du boîtier (102), le boîtier (102) étant formé par une pluralité de parois (102A), dans lesquels la première ouverture (108) et la seconde ouverture (110) sont formées, et la première ouverture (108) et la seconde ouverture (110) étant formées respectivement sur une première paroi (302) et une seconde paroi (304) parmi la pluralité de parois (102A) du boîtier (102), la seconde ouverture (110) étant formée sur la seconde paroi (304), **caractérisé en ce que** la première ouverture (108) est formée au niveau d'un coin reliant la première paroi (302) et la seconde paroi (304) du boîtier (102) et l'au moins une aile inclinée (204) étant formée sur plus d'un bord (206) de la première ouverture (108), qui sont proximaux de la seconde ouverture (110) formée sur la seconde paroi (304) du boîtier (102).

2. Échangeur de chaleur (100) selon la revendication 1, la pluralité d'éléments d'échange de chaleur (104) étant adaptée pour transporter un second fluide pour échanger de la chaleur avec le premier fluide s'écoulant autour de la pluralité d'éléments d'échange de chaleur (104).

3. Échangeur de chaleur (100) selon l'une quelconque des revendications précédentes, l'au moins une aile inclinée (204) étant inclinée selon un angle allant de 0° à 90° par rapport à la première ouverture (108) du boîtier (102).

4. Échangeur de chaleur (100) selon la revendication 1, le premier fluide étant un liquide de refroidissement et le second fluide étant un gaz d'échappement.
